# EUROPEAN PATENT APPLICATION

(11) **EP 4 474 102 A1**
(43) Date of publication of application: **11.12.2024**
(21) Application number: 24180795.7
(22) Date of filing: 07.06.2024
(51) Int. Cl.: B23Q 11/00, B23Q 17/10, A01B 71/06, B60K 17/28

(54) **A CUTTING OR A CUTTING-SPLITTING MACHINE WITH A SAFETY ASSEMBLY FOR PREVENTING INCORRECT USE**

(30) Priority: 08.06.2023 SI 202300091
(71) Applicant: Pisek - Vitli Krpan, d.o.o., 3240 Smarje pri Jelsah (SI)
(72) Inventor: Pisek, Franc, 3240 Smarje pri Jelsah (SI)
(74) Representative: Patentni Biro AF d.o.o.

(57) **Abstract**

The invention belongs to the field of splitting and cutting-splitting machines, particularly to the field of safety devices for said machines. The cutting or a cutting-splitting machine is provided with a safety assembly for preventing incorrect use, which comprises measurement the number of rotations on any rotatable part enabling cutting means rotation, and turning off the machine operation in case incorrect rotations have been sensed. The safety assembly comprises:
- a sensor configured to measure rotations, said sensor being installed on any rotating part,
- a control unit configured to receive information about sensed rotations from the sensor and further configured to trigger termination of machine operation in case sensed rotations are outside of a pre-set range.

The sensor may be a Hall sensor, an inductive sensor, a speed sensor or any other sensor arranged to detect or measure rotation speed and the number of rotations. It may be installed on a PTO shaft, on a shaft on which the cutting means is installed, or on any intermediate element, which is arranged to transfer torque from the PTO shaft to the cutting means.

## Description

### Field of the invention

The present invention belongs to the field of splitting and cutting-splitting machines, particularly to the field of safety devices for said machines. The invention relates to a cutting or a cutting-splitting machine with a safety assembly for preventing incorrect use.

### Background of the invention and the technical problem

Wood is widely used for heating, but has to be suitably shaped and sized for use. During log processing wood trunks are cut into logs having a size and shape corresponding to fireplaces, furnaces, and stoves, so that no further cutting or splitting is necessary. Different wood processing devices are known, which cut and split trunks with minimal manual handling. Said device are for example cutting machines (circular leaf saws), cutting-splitting machines, which also comprise a leaf saw, wherein the operation of the machine may be with a tractor through a PTO shaft or with an electromotor or any other element, which ensures torque for rotation of the cutting means.

A problem in exceeding the number of allowed rotations is particularly occurring in machines driven via the PTO shaft. Consequently, the rotation speed of the cutting means, such as the circular leaf, increases beyond allowed ranges, which represents a possibility for damaging the cutting means, other machine parts of the machine and/or user, which operates with the machine. One possibility is to inform the user about the ranges or maximal rotations in user guides or warning labels, however, this is not ensuring safety.

Therefore, the technical problem, which is solved by the present invention, is the constructional design of safety assembly for preventing incorrect use of the cutting or the cutting-splitting machine and will in case of exceeding setting terminate operation of the machine or the cutting means.

### Prior art

Patent application US2012024427A1 describes a device for processing wood comprising a motor for ensuring operation of cutting means, and a safety system arranged to sense dangerous situations, wherein said safety system comprises a controller, which can turn off the motor in case a dangerous situation is detected. According to a possible embodiment, the cutting means is a circular saw and its rotation is sensed with a system for detecting rotation, which receives discrete signs of rotation, and which is connected to the safety system, wherein signals are sent to the safety system for terminating operation of the reaction system once the cutting means stops rotating. Said rotation sensing is arranged to check whether the device is operating or not, wherein the operator or the user of the wood processing device is protected. The discrete signs of rotation may be electrical pulses, which occur in a particular number of cutting means rotation. The system for sensing rotation may comprise a Hall sensor arranged for detection of rotation by periodic rotation of a magnet installed on a shaft on which the cutting means is installed.

The present invention differs from this solution in that the safety device is arranged to monitor correct operation of the machine and in case of incorrect operation turns off the machine.

### Description of the solution to the technical problem

The invention is based on a splitting, cutting or cutting-splitting machine for preparation of wood comprising rotatable cutting means arranged to cut the logs. The technical problem of designing a safety assembly for preventing incorrect use of the cutting or cutting-splitting machine is solved as defined in the independent claim, while the preferred embodiments of the solution are defined in dependent claims.

The cutting or the cutting-splitting machine according to the invention is equipped with a safety assembly for preventing incorrect use, which involves measurement the number of rotations on any rotatable part enabling cutting means rotation, and turning off the machine operation in case incorrect rotations have been sensed. The safety assembly comprises:
- a sensor configured to measure rotations, said sensor being installed on any rotating part,
- a control unit configured to receive information about sensed rotations from the sensor and further configured to trigger termination of machine operation in case sensed rotations are outside of a pre-set range.

The sensor may be a Hall sensor, an inductive sensor, a speed sensor or any other sensor arranged to detect or measure rotation speed and number of rotations. It may be installed on a PTO shaft, on a shaft on which the cutting means is installed, or on any intermediate element arranged to transfer torque from the PTO shaft to the cutting means.

The preferred embodiment, wherein the Hall sensor is used, the safety assembly comprises the following: an arbitrary number of magnets are arbitrarily arranged on a carrying ring mounted on the shaft, so that it rotates together with the shaft. Preferably, the ring is attached to the shaft with a screw. In the vicinity of the carrying ring the Hall sensor is mounted, so that it can sense the magnets on the ring. The Hall sensor is mounted using a holder, usually on the housing of the drive. A cable or any other suitable wire connection connects the Hall sensor to the controller, so that data about sensed magnets are transferred to the controller, which consequently calculates the rotations and based on this number controls the machine.

A possible upgrade of this system is that the machine is provided with any machine part, which is in case of incorrect rotations arranged to terminate torque transfer. This may be achieved via shutting off the PTO shaft, for example using any connection means to the tractor known to the skilled person, such as via tractor sockets or isobus connectors to the tractor. A second possibility is to enable shutting off with any other connection, which is arranged to simultaneously turn off rotation of the PTO shaft. Further possibilities are to shut off transfer of rotations in a mechanical, hydraulic, electric or combined manner, for example using different brakes, clutches, belt tensioning devices, chain tensioning devices, and similar components, which may terminate or interrupt torque transfer to the cutting means. The tensioning device is in a possible embodiment installed in any place, where the torque is transferred using a chain or belts tensioned by the said tensioning device. The clutch may be installed on any shaft transferring torque. The brake may be installed in any suitable manner to terminate operation of the cutting means in case of sensed incorrect operation. Such brakes and their installation are known. An embodiment as disclosed in patent SI 25765 is possible.

In this case, even if the user sets the rotations on the PTO shaft too high (outside of the allowed range), the rotations are not transferred to other driven parts, such as the cutting means or hydraulic pump, as the drive connection will be interrupted.

The invention will be described in further detail based on exemplary embodiment and figures, which show:
- Figure 1: The safety assembly for measuring rotation
- Figure 2: The safety assembly for measuring rotation from the opposite side, wherein a possible arrangement of magnets on the carrier ring is shown
- Figure 3: The cutting machine with the safety assembly, wherein the rotation sensor is installed on the PTO shaft

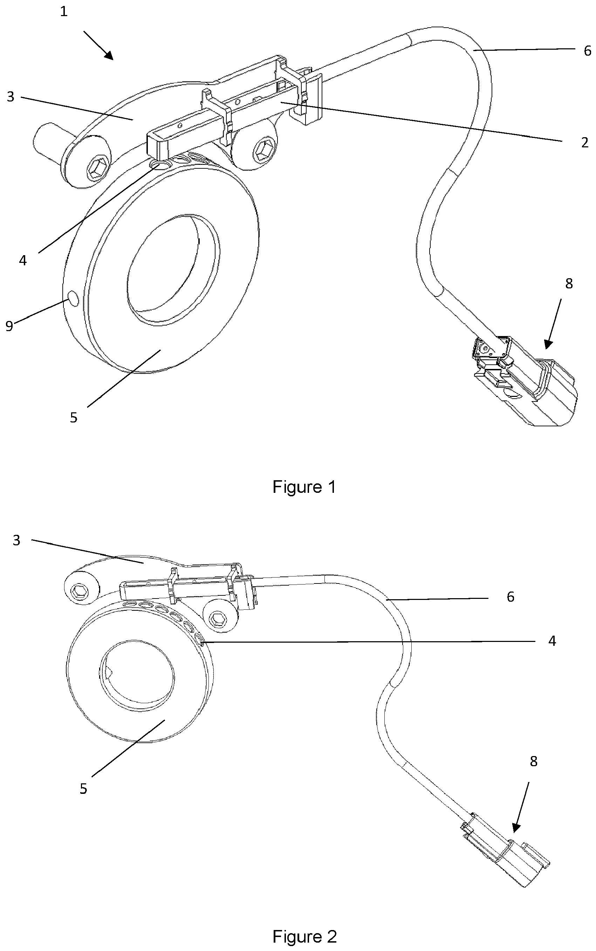

Figure 1 shows the safety assembly 1, which comprises:
- a Hall sensor 2 for measuring rotation installed on a holder 3, which is arranged for installation on a housing of the machine drive near the drive shaft 7, via which the torque is transferred to the cutting means of the machine,
- a cable or a wire connection 6 for connecting the Hall sensor 2 with the control unit (not shown) via a connector 8,
- magnets 4 installed on a carrier ring 5, which is with a screw 9 mounted on the shaft 7, so that it rotates together with the shaft 7, wherein said magnets 4 may be sensed by the Hall sensor 2 to determine the rotation speed of the shaft, and
- a control unit arranged to receive information about sensed rotations from the sensor and further configured to trigger termination of machine operation in case sensed rotations are outside of a pre-set range.

Measurement of the number of rotations on any rotating part, which enables rotation of the cutting means, is important for timely termination of machine operation in case incorrect number of sensed rotations is detected. This essentially decreases the possibility of cutting means damage, damage to other parts of the machine, and/or injuries of the user who operates the machine.

Figure 2 shows a view of the safety assembly from the opposite side, wherein the magnets 4 are visible and their arrangement on the carrier ring 5 is shown.

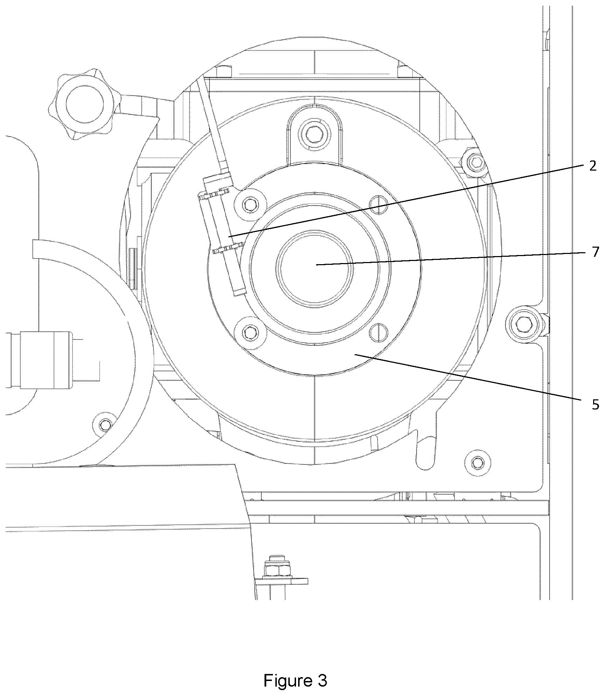

The safety assembly shown in figures 1 and 2 may be installed in a cutting or a cutting-splitting machine, in particular to the PTO shaft 7 as shown in the circular part of figure 3.

## Claims

1. A cutting or a cutting-splitting machine with a safety assembly for preventing incorrect use, comprising a step of measurement of number of rotations on any rotatable part, which enables rotation of cutting means, and termination of machine operation in case of unsuitable number of sensed rotations, wherein said safety assembly comprises:
- a sensor configured to measure rotations, said sensor being installed on any rotating part,
- a control unit configured to receive information about sensed rotations from the sensor and further configured to trigger termination of machine operation in case sensed rotations are outside of a pre-set range.

2. The cutting or a cutting-splitting machine with a safety assembly for preventing incorrect use according to claim 1, wherein the sensor is selected in the group comprising a Hall sensor (2), an inductive sensor, a speed sensor or any other sensor arranged to sense or measure speed of rotation and number of rotations.

3. The cutting or a cutting-splitting machine with a safety assembly for preventing incorrect use according to claim 1 or claim 2, wherein the sensor is installed on the PTO shaft, on a shaft on which the cutting means is installed, or on any other intermediate element, which is arranged to transfer the torque from the PTO shaft to the cutting means.

4. The cutting or a cutting-splitting machine with a safety assembly for preventing incorrect use according to claim 2 or claim 3, wherein the sensor is a Hall sensor (2).

5. The cutting or a cutting-splitting machine with a safety assembly for preventing incorrect use according to the preceding claim, wherein the safety device comprises the following components:
- the Hall sensor (2) for measuring rotations,
- a cable or a wire connection (6) to connect the Hall sensor (2) to the control unit,
- magnets (4) installed on a carrier ring (5) attached to the shaft (7), so as to rotate together with the shaft (7), wherein the Hall sensor (2) is arranged to sense said magnets (4) and thus determine the rotation speed of the shaft, and
- the control unit configured to receive information about sensed rotations from the sensor and further configured to trigger termination of machine operation in case sensed rotations are outside of a pre-set range.

6. The cutting or a cutting-splitting machine with a safety assembly for preventing incorrect use according to the preceding claim, wherein the Hall sensor is installed on a holder (3) arranged for installation on a frame of the machine drive near the drive shaft (7), through which torque is transferred to the cutting means of the machine.

7. The cutting or a cutting-splitting machine with a safety assembly for preventing incorrect use according to any of the preceding claims, which further comprises any machine part arranged to terminate transfer of rotations in case of detected incorrect rotations.

8. The cutting or a cutting-splitting machine with a safety assembly for preventing incorrect use according to the preceding claim, wherein the rotation transfer is achieved in a mechanical, hydraulic, electric or combined manner.

9. The cutting or a cutting-splitting machine with a safety assembly for preventing incorrect use according to claim 8, wherein the rotation transfer is achieved by turning off the PTO shaft via any communication connection with a tractor.

10. The cutting or a cutting-splitting machine with a safety assembly for preventing incorrect use according to claim 8, wherein the rotation transfer is achieved using clutches, belt tensioning devices, chain tensioning devices, and similar components, which may terminate or interrupt torque transfer to the cutting means.

11. The cutting or a cutting-splitting machine with a safety assembly for preventing incorrect use according to claim 10, wherein the rotation transfer is achieved in any location, where torque is transferred using a chain or belts tensioned by a tensioning device.

12. The cutting or a cutting-splitting machine with a safety assembly for preventing incorrect use according to claim 10, wherein the rotation transfer is achieved with a brake or a clutch mounted on any shaft arranged to transfer torque.
